# EUROPEAN PATENT SPECIFICATION

(11) **EP 0 448 576 B1**
(45) Date of publication and mention of the grant of the patent: **21.04.1993**
(21) Application number: 90900086.1
(22) Date of filing: 12.12.1989
(51) Int. Cl.: F16L 59/02, F01B 31/08, F01D 25/08

(54) **METHOD OF HEAT INSULATING A SURFACE OF A HIGH TEMPERATURE**
WÄRMEDÄMMUNG EINER HOCHTEMPERATURFLÄCHE
PROCEDE D'ISOLATION THERMIQUE POUR UNE SURFACE A TEMPERATURE ELEVEE

(30) Priority: 16.12.1988 DK 7018/88
(43) Date of publication of application: 02.10.1991
(73) Proprietor: Rockwool International A/S, 2640 Hedehusene (DK)
(72) Inventor: KAMSTRUP-LARSEN, Jörgen, DK-3450 Alleröd (DK)
(74) Representative: Kyed, Iver
(86) International application number: DK8900289
(87) International publication number: WO9007080

(56) References cited:
- EP-A- 0 220 371
- GB-A- 1 486 347
- SU-A- 40 672
- US-A- 4 418 724
- Patent Abstracts of Japan, Vol 10, No 25, M450, abstract of JP 60-182306, publ 1985-09-17 (HITACHI SEISAKUSHO K.K.)
- Patents Abstract of Japan, abstract of JP 52-60309 publ 1977-05-18

## Description

This invention relates to a method for heat insulating a high temperature surface of a power turbine, furnace or boiler comprising mounting a shell or a part thereof at a distance from the surface, and subsequently filling the space between the shell and the surface with mineral fibres to form an insulating layer.

Without insulation the surface temperature of a turbine may rise to 500°C during operation.

The object of insulating a power turbine housing is to maintain the surface temperature of the turbine housing at a sufficiently low value, e.g. 40°C, to allow the operators to work comfortably in proximity to the turbine and to maintain a high turbine efficiency and obtain a satisfactory heat economy.

Furthermore, it is desirable to maintain a constant temperature in order to avoid undesired stress in the material.

In a known method of heat insulating power turbines, a layer of mortar containing mineral fibres, i.e. a mixture of mineral fibres, cement and water, is sprayed onto the turbine housing to obtain a layer of a thickness of e.g. 150 mm. Due to the vibrations it is sometimes necessary to reinforce the layer thus formed with a wire netting.

A power turbine is ordinarily dismantled and checked at suitable intervals, e.g every 3rd or 4th year. Such a check-up typically takes about 8 weeks, one week for removing the mortar layer, 5 weeks for the actual check-up and necessary repairs, if any, and the last 2 weeks for re-establishing the layer of mortar.

Because of the large sums invested in turbines for power stations it is essential that the stand still is as short as possible. Therefore, there is a need for reducing as much as possible the time required to remove and to re-establish the insulation layer on the turbine housing.

As mentioned above the use of a mortar insulation requires a relatively long period for removing and re-establishing the insulation layer, and furthermore the removal of the layer causes contamination of the building in which the turbine is located. These operations therefore require the construction of a tent surrounding the turbine. The re-establishment of the mortar layer is a time consuming operation because the new mortar layer often has to be sprayed on to the turbine in steps with intervening drying periods. Besides, it may be difficult to avoid that the mortar layer cracks or falls off just as it may be difficult to make the mortar layer fit tightly to the turbine housing due to its poor adhesion.

EP patent publication No. 0.220.371 A1 discloses an element for carrying hot gasses comprising an inner casing, an outer casing, and an insulation layer consisting of a ceramic fibre material provided between the two casings. In a preferred embodiment of the invention, the outer casing is fixed to the inner casing by means of spacers.

US patent No. 4.418.724 discloses a heat insulating casing for e.g. pipes comprising a rigid, tubular insulating shell composed of a number of insulating plates joined together to form a polygonal shell, the insulating plates consisting of a compressed material based on pyrogenic silica, reinforcement fibres and an opacifier, and a moisture-proof, steel jacket comprising an inner shell, an outer shell and ring-shaped end plates, said insulating shell being provided inside the steel jacket.

The abstract of JP patent No. 60-182306 discloses a turbine casing comprising a steel framework containing layers of heat insulating inorganic fibre material, and a heat insulating cloth of extra-thin glass fibres, said cloth being fixed to the exterior surface of the insulating fibre material.

GB patent No. 1.486.347 discloses a heat insulation article comprising heat insulating material disposed in a pocket, said pocket having a portion of the side wall formed of glass fabric, and another portion of the side wall being formed of plastics material or textile fabric coated with plastics material.

In using the heat insulation articles, a suitable number of articles are wrapped around the object to be insulated having the side wall formed of glass fabric facing the hot object, the articles being positioned close together. Preferably, the articles are provided with hooks, which are attached to the hot object in order to hold the articles in place. Also, the articles can be held in place by straps.

The abstract of JP patent No. 52-60309 discloses a heat insulating device for insulating various bodies, e.g. a turbine casing, said device comprising a number of insulating layers being held tight by wire netting, which may be secured to the body casing, wherein each layer is composed of shaped blocks of an insulating material, the size of the blocks increasing in each additional layer provided around the body. The outer layer is covered with hard cement.

In constructing the heat insulating device, first, a layer is formed by arranging insulating blocks around the body to be insulated, and then, the wire netting is mounted to hold the insulating layer thus obtained. This process is repeated for each additional layer.

The heat insulation device disclosed in the abstract of JP patent No. 52-60309 suffers from the drawbacks that the process of cutting, shaping and mounting of the blocks are laborious and very time-consuming , and that it is difficult to obtain a close packing of the blocks, which make it necessary to use more layers to obtain the required heat insulating capacity. Furthermore, the use of a cement layer is not desirable due to the drawbacks explained above.

EP-A-0,123,768 discloses a method for the external insulation of a pipe or a pipe component and comprises the steps of providing a jacket around the pipe or the pipe component, placing a member permeable to air but impermeable to loose insulation material in the space between the pipe or the pipe component and the jacket at one end thereof, providing a subatmospheric pressure at the outside of said airpermeable member to cause air to flow through the space from the other end of the jacket, and supplying a loose insulating material, such as mineral fibres, to the other end of the jacket so as to cause the space between the pipe or pipe connector and the jacket to be filled with insulating material.

EP-A-0,149,090 discloses a thermal insulation comprising a gas-tight outer metal wall and a gas-tight inner metal wall which together delimit an evacuated space which contains insulation material in the form of at least two types of glass fibres and preferably in the form of three layers of different glass fibres. It does not appear from the description of EP-A-0,149,090 how the insulating glass fibres are introduced into the gas-tight space and how they are placed in layers within the evacuated space.

The object of this invention is to avoid or substantially reduce the drawbacks of the above mentioned prior art insulating techniques.

This object is obtained with the method of the invention which method comprises packing said space with insulation elements, each insulation element comprising a cover of a flexible, heat resistant material and containing a loose mineral fibre material.

The invention is based on the discovery that by mounting the shell initially and using insulation elements being flexible in form, the insulation layer can be established very easily and very quickly to obtain a layer having a minimum of free space between the individual elements thus providing optimum heat insulating performance.

The method according to the invention presents the advantage that the construction of the shell and the filling of the space thus formed with insulation elements may take place gradually thereby making it possible to check at suitable intervals that the insulation elements are packed properly.

A further advantage offered by the insulation formed by the method of the invention is that it is strongly sound absorbing thereby eliminating the need for providing a separate outer sound shell when insulating e.g. turbines.

The shell in question serves only to delimit a space surrounding the surface to be insulated and, therefore, it should only be capable of resisting the pressure exerted by the relatively light insulation elements. Thus, the shell may consist of a relatively thin and readily workable material, e.g. a thin metal sheet. The shell is preferably made from plate-shaped elements in cases where it is desired to provide an insulation having a smooth surface.

In a particularly preferred embodiment of the method of the invention a shell is used consisting of sandwich elements having a mineral wool core with a metal sheet, such as a steel sheet, attached to each side of the core by means of a binder Thus, a dobble insulation is obtained, i.e. an inner insulation layer formed by the insulation elements which are placed in the space between the surface to be insulated and the shell, and an outer insulation layer formed by said sandwich elements. The outer insulation layer will thus work as a safety insulation layer in case of defects in the inner insulation layer.

However, the shell may also consist of a rigid netting provided the mesh size of the netting is such that the insulation elements are retained in the netting.

After the above mentioned shell has been established, the space between the surface to be insulated and the shell is readily filled with insulation elements. Since these elements are readily deformed the insulation elements can be closely packed in connection with the filling of said space so that no holes are left in the insulation.

In cases where the surface to be insulated comprises protruding anchor bolts, which is often the case with turbine housings, spacers for supporting the surrounding shell may be attached to said anchor bolts. A well defined space between the surface to be insulated and the surrounding shell is thereby obtained.

When the insulation layer is to be dismantled, optionally after dismantling of the shell, the insulation elements are removed. These elements will ordinarily remain intact and can therefore be re-used when an efficient heat insulation is to be re-established after a check, if any, has been completed. Thus, it is unnecessary to take special precautions to protect the surroundings, such as the construction of a tent, when the insulation layer is dismantled and re-established.

Because of the possibility of re-using the insulation elements, the costs of materials can be kept at a minimum.

German published patent specification No. 36 44 531 A1 discloses a method of providing a fire proof filling of shielding holes in walls and floors, and particularly holes with cable inlets. In this known method bags of yarn of ceramic fibres and containing a light refractory material, such as ceramic granules, are placed in the holes and around the cable or cables.

Dutch patent application No. 8400351 discloses a method of insulating cellar space by means of an insulation material in the form of e.g. mineral wool contained in bags or sacks.

None of these prior art methods relates to high temperature insulation and no space defining elements are mounted at a distance from the surface to be insulated.

As mentioned above the insulation elements used consist of a cover of a heat resistant material which cover contains loose mineral fibres.

"Heat resistant" used herein means that the material can be heated to a temperature of at least 100°C without melting or decomposing.

The covers used preferably consist of a woven or non-woven fibre material, e.g. nylon fibres, glass fibres, coal fibres, ceramic fibres and/or aramide fibres. The cover may also consist of other materials, e.g. a thin perforated metal foil. Covers of such perforated metal foil offer the advantage of also being heat reflecting to some degree.

By varying the size of the holes of the perforated foil and the density of the woven or non-woven fibre material it is also possible to control the release of dust from the insulation elements.

The elements preferably have a thickness of a few cm and surface dimensions ranging from a few cm up to 50-100 cm. For a given insulation task insulation elements of different sizes are preferably used in order to allow the insulation elements to be packed as closely as possible.

The mineral fibre material contained in the covers preferably contains no binder as several binders tend to decompose and to give off large amounts of gas under high temperature conditions.

Preferred mineral fibres are rock wool fibres, glass fibres, carbon fibres and ceramic fibres. Rock wool fibres are particularly preferred because they are heat resistant at temperatures up to 1100°C and because they are relatively inexpensive.

Although the method of the invention primarily has been described with reference to the heat insulation of power turbines it should be understood that it is also suitable for use in the insulation of e.g. furnaces and boilers, including boilers for use in district heating plants and steam boilers.

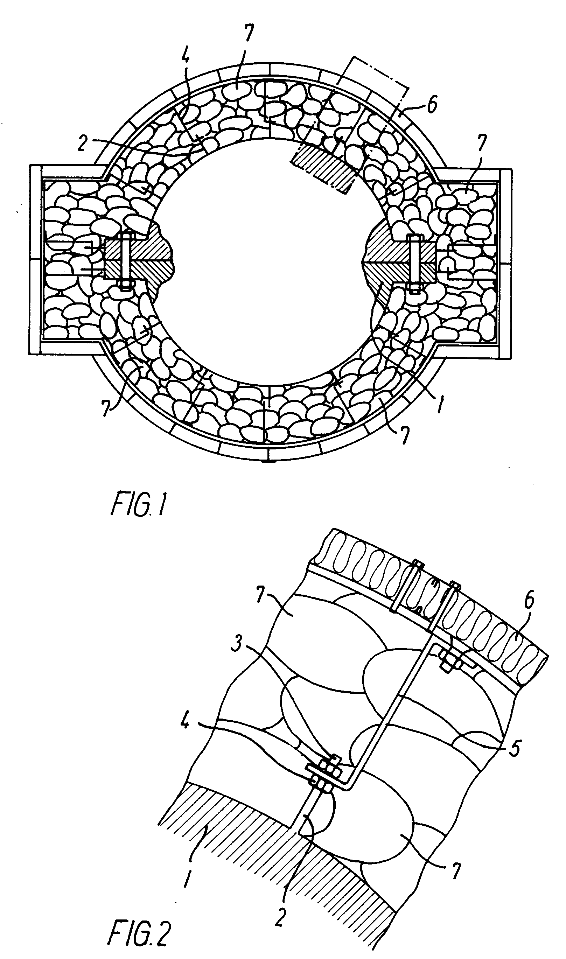

The invention will now be described in further detail with reference to the drawing in which
- Fig. 1: shows a cross sectional view of a turbine housing provided with heat insulation prepared by a preferred embodiment of a method of the invention and
- Fig. 2: shows part of the cross sectional view according to Fig. 1 on an enlarged scale.

The drawing shows a steam turbine housing 1 having externally protruding bolts 2. The free end 3 of each bolt 2 has a thread, and said end is attached to one end of a spacer 5 by means of nuts 4, the opposite end of said spacer being connected with a shell 6 surrounding the steam turbine housing 1. The space between the steam turbine housing 1 and the shell 6 is filled with a large number of a insulation elements 7, each consisting of a cover of a heat resistant material and containing a mineral fibre material.

## Claims

1. A method for heat insulating a high temperature surface of a power turbine, furnace or boiler comprising mounting a shell or a part thereof at a distance from the surface and subsequently filling the space between the shell and the surface with mineral fibres to form an insulating layer, **characterized** in packing said space with insulation elements, each insulation element comprising a cover of a flexible, heat resistant material and containing a loose mineral fibre material.

2. A method according to claim 1, **characterized** in using a shell consisting of a thin metal sheet.

3. A method according to claim 1, **characterized** in using a shell consisting of sandwich elements made from a mineral wool core and a metal sheet attached to each side of the core by means of a binder.

4. A method according to claims 1, 2 or 3 for insulating a surface provided with protruding anchoring means, **characterized** in attaching the shell to the anchoring means by means of spacers.

5. A method according to any of the preceding claims, **characterized** in that the covers of the insulation elements consist of a woven or non-woven fibre material.

6. A method according to any of the preceding claims, **characterized** in that the insulation elements are of different sizes.

7. A method according to any of the preceding claims, **characterized** in that the mineral fibre material consists of binder-free rock wool.

## Patentansprüche

1. Verfahren zur Wärmeisolierung einer Hochtemperaturfläche einer Arbeitsturbine, einer Feuerungsanlage oder eines Dampfkessels, umfassend das Anbringen eines Mantels oder eines Teils desselben in einem Abstand von der Oberfläche und das anschließende Ausfüllen des Hohlraums zwischen dem Mantel und der Oberfläche mit Mineralfasern zur Bildung einer Isolierschicht, dadurch **gekennzeichnet**, daß der Hohlraum mit Isolierelementen ausgefüllt wird, wobei jedes Isolierelement eine Umhüllung aus einem flexiblen, hitzefesten Material aufweist und ein loses Mineralfasermaterial enthält.

2. Verfahren nach Anspruch 1, **gekennzeichnet** durch die Verwendung eines aus einem dünnen Metallblech bestehenden Mantels.

3. Verfahren nach Anspruch 1, **gekennzeichnet** durch die Verwendung eines aus Sandwichelementen bestehenden Mantels, die aus einem Mineralwollekern und einem Metallblech gebildet sind, das mit einem Bindemittel an jeder Seite des Kerns befestigt ist.

4. Verfahren nach Anspruch 1, 2 oder 3 zur Isolierung einer mit vorspringenden Verankerungsmittel versehenen Oberfläche, dadurch **gekennzeichnet**, daß der Mantel mit Abstandhaltern an den Verankerungsmitteln befestigt wird.

5. Verfahren nach einem der vorhergehenden Ansprüche, dadurch **gekennzeichnet**, daß die Umhüllungen der Isolierelemente aus einem gewebten oder nicht-gewebten Fasermaterial bestehen.

6. Verfahren nach einem der vorhergehenden Ansprüche, dadurch **gekennzeichnet**, daß die Isolierelemente von unterschiedlicher Größe sind.

7. Verfahren nach einem der vorhergehenden Ansprüche, dadurch **gekennzeichnet**, daß das Mineralfasermaterial aus bindemittelfreier Steinwolle besteht.

## Revendications

1. Un procédé d'isolation thermique pour une surface à température élevée d'une turbine de centrale, d'un four ou d'une chaudière, comportant le montage d'une coquille ou d'une partie de celle-ci à distance de la surface, puis le remplissage de l'espace compris entre la coquille et la surface par des fibres minérales pour former une couche d'isolation, caractérisé par le remplissage dudit espace avec des éléments d'isolation, chaque élément d'isolation comportant un revêtement en une matière souple résistant à la chaleur et contenant une matière en fibres minérales libres.

2. Un procédé selon la revendication 1, caractérisé par l'utilisation d'une coquille constituée en une feuille métallique mince.

3. Un procédé selon la revendication 1, caractérisé par l'utilisation d'une coquille constituée d'éléments du type sandwich constitués par un noyau en laine minérale et une feuille métallique assujettie à chaque côté du noyau au moyen d'un liant.

4. Un procédé selon la revendication 1,2 ou 3 pour isoler une surface pourvue de moyens d'ancrage en saillie, caractérisé par la fixation de la coquille aux moyens d'ancrage par l'intermédiaire d'entretoises.

5. Un procédé selon l'une quelconque des revendications précédentes, caractérisé en ce que les revêtements des éléments d'isolation sont constitués en une matière fibreuse tissée ou non tissée.

6. Un procédé selon l'une quelconque des revendications précédentes, caractérisé en ce que les éléments d'isolation sont de tailles différentes.

7. Un procédé selon l'une quelconque des revendications précédentes, caractérisé en ce que la matière fibreuse minérale est constituée en laine de roche exempte de liant.
